# FASCICULE DE BREVET EUROPEEN

(11) **EP 0 219 386 B1**
(45) Date de publication et mention de la délivrance du brevet: **03.02.1993**
(21) Numéro de dépôt: 86402006.0
(22) Date de dépôt: 12.09.1986
(51) Int. Cl.: G06F 3/05, H03M 1/50

(54) **Dispositif d'introduction de données dans un microprocesseur**
Gerät zur Einführung von Daten in einen Mikroprozessor
Device for the introduction of data to a microprocessor

(30) Priorité: 17.09.1985 FR 8513755
(43) Date de publication de la demande: 22.04.1987
(73) Titulaire: ESSWEIN S.A., F-85002 La Roche-sur-Yon (FR)
(72) Inventeur: Geay, Jean-Claude, F-75008 Paris (FR); Duval, Jean-Marcel, F-75008 Paris (FR); Barbeau, Christian, F-75008 Paris (FR)
(74) Mandataire: Grynwald, Albert

(56) Documents cités:
- DE-B- 1 086 744
- GB-A- 2 020 934

## Description

L'invention est relative à un dispositif d'introduction de données dans un microprocesseur.

Dans de nombreux appareils, notamment du domaine électroménager, l'amplitude d'une grandeur est déterminée par l'actionnement de l'organe de commande d'un potentiomètre (ou résistance variable) et le signal aux bornes de ce dernier est appliqué à l'entrée d'un microprocesseur.

Par exemple dans un lave-linge la vitesse de rotation du tambour lors de l'essorage est déterminée par manoeuvre du bouton d'un potentiomètre aux bornes duquel est appliqué une tension continue. Le signal continu fourni par ce potentiomètre est mis en forme, à l'aide d'un convertisseur analogique-numérique, pour pouvoir être appliqué à l'entrée d'un microprocesseur. Ce signal numérique à l'entrée du microprocesseur constitue le plus souvent la consigne de vitesse d'une régulation.

Un tel dispositif d'introduction de données est onéreux car il comporte, d'une part, un redresseur et, d'autre part, un convertisseur analogique-numérique.

Dans le brevet GB-A-2 020 934, la valeur d'une variable de fonctionnement d'un appareil électroménager (par exemple la température) est obtenue sous forme numérique à partir de la valeur d'une résistance fixe qui est elle-même fonction de la variable de fonctionnement considérée.

La transformation en valeur numérique est réalisée par l'intermédiaire d'un microprocesseur et se base sur la mesure du temps de charge d'un condensateur commun à deux branches résistives comprennant l'une la résistance fixe de valeur variable, et l'autre une résistance de référence.

Ce système utilise un dispositif de commutation de manière à appliquer successivement dans le temps une tension de référence à chacun des circuits résisto-capacitifs.

Dans le brevet DE-A-1 086 744 qui concerne un dispositif de commande d'un thyratron, et plus spécialement la manière de générer les impulsions de commande qui doivent être appliquées à la gachette du thyratron, il est décrit un circuit qui forme des impulsions variables à taux d'espacement déterminé en fonction d'une tension continue.

Cette impulsion est obtenue comme signal de sortie d'un transistor alimenté sur ses connexions d'entrée par une tension résultant de la juxtaposition d une composante alternative et d'une composante continue de telle sorte que la variation de la composante continue déplace la sinusoïde de la composante alternative par rapport à l'axe des abcisses et modifie le temps de conduction du transistor.

La variation de la tension continue est obtenue par l'intermédiaire d'un second transistor lui-même commandé par une tension continue appliquée à la base de ce second transistor.

L'invention remédie aux divers inconvénients des réalisations indiquées.

Elle est caractérisée en ce que le potentiomètre est alimenté par un signal alternatif proportionnel au signal du secteur d'alimentation et en ce que le signal aux bornes du potentiomètre est appliqué à une électrode de commande d'un interrupteur commandé qui transmet un signal de niveau constant à l'entrée de données du microprocesseur lorsque le signal sur l'électrode de commande dépasse le seuil de conduction de l'interrupteur commande. L'interrupteur commandé est par exemple un transistor.

Cet interrupteur commandé n'est conducteur que lorsque la valeur du signal de commande dépasse le seuil de conduction; dans le cas d'un transistor ce seuil est égal à la tension Vbe. Au cours de chaque période du signal alternatif la durée pendant laquelle ce seuil est dépassé est d'autant plus importante qu'est élevée la valeur du signal alternatif, cette valeur dépendant du réglage du potentiomètre. Le microprocesseur est programmé pour convertir cette durée en une donnée numérique.

Le dispositif selon l'invention est d'une très grande simplicité et est particulièrement bon marché. Il est vrai toutefois que sa précision dépend de la précision de la tension d'alimentation qui est en général de l'ordre de ± 10%. Mais cette faible précision ne constitue pas un inconvénient dans la plupart des applications. En particulier la précision est suffisante pour l'affichage de la vitesse de rotation, lors de l'essorage, du tambour d'un lave-linge ou pour la détermination de la température de chauffage de l'eau de lavage dans une machine à laver.

L'incertitude, c'est-à-dire l'imprécision, est la plus importante pour les valeurs du signal alternatif qui sont les plus faibles. C'est pourquoi il est préférable de programmer le microprocesseur de façon telle que ne soient pas prises en compte les plus faibles valeurs du signal d'entrée. Il est également possible de programmer le microprocesseur pour que ne soient pas prises en compte les plus fortes valeurs du signal d'entrée, notamment pour éviter que ne soit dépassée une valeur limite pour ce signal qui est par exemple une vitesse de rotation de tambour de lave-linge. Ainsi, quand on a affaire à un potentiomètre rotatif (par exemple), on prévoit des plages "mortes" aux deux extrémités de la course du bouton. Chacune de ces plages s'étend par exemple sur un secteur angulaire de 30°.

D'autres caractéristiques et avantages de l'invention apparaîtront avec la description de certains de ses modes de réalisation, celle-ci étant effectuée en se référant aux dessins ci-annexés sur lesquels:
la figure 1 est un dispositif conforme à l'invention, et
les figures 2a et 2b sont des diagrammes illustrant le fonctionnement du dispositif de la figure 1.

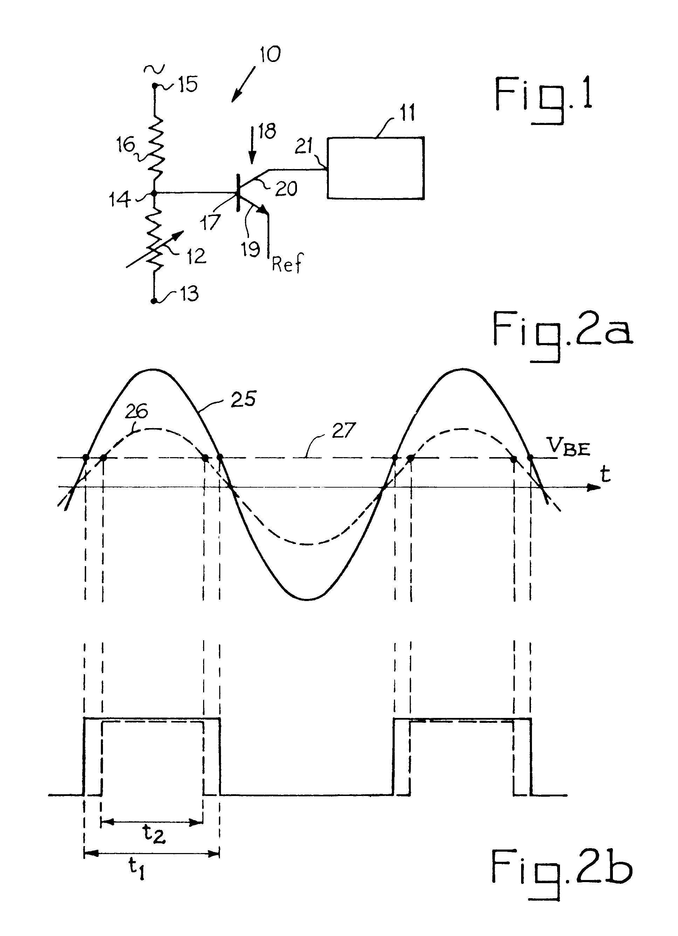

Dans l'exemple le dispositif 10 d'introduction de données dans un microprocesseur 11 (figure 1) est destiné à l'affichage, par l'utilisateur, de la vitesse de rotation du tambour d'un lave-linge lors de la phase d'essorage. Cette vitesse sélectionnée constitue une valeur de consigne d'une régulation, c'est-à-dire que cette valeur de consigne est comparée, dans le microprocesseur 11, à la vitesse réelle de rotation du tambour, cette dernière étant déterminée par une génératrice tachymétrique (non représentée). Le résultat de cette comparaison est un signal d'erreur qui est utilisé pour commander l'angle de phase d'un interrupteur en série avec le moteur d'entrainement du tambour.

Le dispositif d'introduction de données comprend un potentiomètre 12, c'est-à-dire une résistance de valeur variable, de valeur maximum 2,2 kilo-ohms dans une réalisation, dont une borne 13 est reliée à une borne du secteur d'alimentation, en général 220 volts, 50 hertz, et dont l'autre borne 14 est connectée à la seconde borne 15 du secteur d'alimentation alternatif par l'intermédiaire d'une résistance 16 de plus forte valeur, 470 kilo-ohms dans ladite réalisation. En variante les bornes 13 et 15 sont connectées aux bornes secondaires d'un transformateur dont le primaire est alimenté par le secteur ; dans ce dernier cas, pour maintenir un faible coût, le transformateur n'est pas prévu uniquement pour le dispositif d'introduction de données mais pour fournir d'autres signaux au lave-linge.

La borne commune 14 aux résistances 12 et 16 est reliée à la base 17 d'un transistor 18 du type NPN BC 538 dont l'émetteur 19 est relié à une source (non représentée) délivrant un signal de niveau constant et dont le collecteur 20 est relié directement à l'entrée 21 du microprocesseur 11.

Pour la description du fonctionnement on fera appel aux figures 2a et 2b qui sont des diagrammes sur lesquels l'abscisse représente le temps et l'ordonnée l'amplitude des signaux.

Sur la figure 2a la courbe 25 en traits pleins représente le signal appliqué sur la base 17 du transistor 18 lorsque la résistance 12 présente une première valeur et la courbe 26 en traits interrompus correspond également au signal appliqué sur la base 17 mais pour une plus faible valeur de la résistance 12.

Le transistor 18 n'est conducteur que lorsque l'amplitude du signal appliqué sur sa base dépasse le signal Vbe représenté par la ligne interrompue 27, parallèle à l'axe des abscisses, sur la figure 2a. Dans ces conditions, comme le montre les figures 2a et 2b, la durée de conduction à chaque période du signal alternatif du secteur est fonction de l'amplitude du signal appliqué sur la base 17, c'est-à-dire de la valeur de la résistance 12, donc du réglage du potentiomètre. On voit en effet que la courbe 25 atteint, par valeurs croissantes, plus rapidement la valeur Vbe que la courbe 26 et réciproquement, par valeurs décroissantes, la courbe 26 coupe la droite 27 plus tôt que ne le fait la courbe 25. Ainsi au cours d'une période du signal alternatif 50 hertz le transistor 18 est conducteur pendant une durée t₁ pour le premier réglage du potentiomètre et pendant une durée t₂ plus faible pour le second réglage du potentiomètre, avec une valeur plus faible de résistance 12.

La durée pendant laquelle l'entrée 21 reçoit un signal est donc fonction du réglage du potentiomètre 12.

Le microprocesseur 11 est programmé pour transformer cette durée t de conduction du transistor 18 au cours de chaque période du signal alternatif en une valeur numérique représentant la vitesse sélectionnée.

La tension Vbe est relativement sensible à la température ambiante. C'est pourquoi le microprocesseur 11 est programmé pour ne pas prendre en compte les valeurs les plus faibles du signal, qui sont les plus sensibles à la valeur Vbe. Autrement dit la programmation est telle que le début de la course du potentiomètre 12 est considérée comme une plage morte, par exemple pour une rotation de 30°.

De même il est préférable de prévoir, également par programmation, une autre plage morte à l'autre extrémité de la course du potentiomètre, c'est-à-dire pour les plus grandes valeurs de la résistance 12. Cette disposition permet de ne pas dépasser une valeur limite de vitesse de rotation du tambour du lave-linge lors de l'essorage.

Ces plages mortes aux extrémités de la course du potentiomètre permettent dans une certaine mesure de s'affranchir des imprécisions inhérentes à la réalisation du dispositif 10. En effet, outre l'imprécision sur la tension Vbe, il faut également tenir compte de l'imprécision habituelle sur la tension du secteur qui est de l'ordre ± 10%. De plus dans la réalisation décrite la précision de la résistance 12 est également de l'ordre de ± 10% tandis que la précision de la résistance 16 est de ± 2%.

Le dispositif d'entrée de données est particulièrement simple et peu onéreux. Il ne nécessite pas de redresseur et la conversion analogique-numérique se réduit à un transistor, de façon plus générale un interrupteur commandé.

L'invention n'est bien entendu pas limitée à l'exemple décrit. Elle concerne de façon générale un dispositif d'entrée de données dans un microprocesseur, plus particulièrement pour des appareils électroménagers, dans lequel le signal à introduire est proportionnel au signal alternatif du secteur et est appliqué à l'électrode de commande de l'interrupteur commandé pour que l'entrée de données 21 du microprocesseur 11 ne reçoive un signal que lorsque le signal analogique d'entrée dépasse le seuil de conduction de l'interrupteur, le microprocesseur étant programmé pour transformer la durée de conduction, au cours de chaque période, en une valeur numérique représentant le signal affiché.

## Revendications

1. Dispositif d'entrée de données dans un microprocesseur (11), notamment pour une machine d'usage ménager, dans lequel la donnée est déterminée par l'actionnement de l'organe de commande d'un potentiomètre ou résistance variable, caractérisé en ce que le potentiomètre est alimenté par un signal alternatif proportionnel au signal du secteur d'alimentation et en ce que le signal aux bornes du potentiomètre (12) est appliqué à une électrode de commande (17) d'un interrupteur commandé (18) qui transmet un signal de niveau constant à l'entrée de données (21) du microprocesseur (11) lorsque le signal sur l'électrode de commande dépasse le seuil de conduction (Vbe) de l'interrupteur commandé.

2. Dispositif selon la revendication 1, caractérisé en ce que l'interrupteur commandé (18) est constitué par un transistor.

3. Dispositif selon la revendication 1 ou 2, caractérisé en ce que le potentiomètre (12), ou résistance variable, est en série avec une résistance (16) de valeur sensiblement plus importante, le signal du secteur, ou un signal proportionnel, étant appliqué aux bornes de l'ensemble en série constitué par la résistance variable (12) et la résistance (16) de plus grande valeur.

4. Dispositif selon l'une quelconque des revendications 1 à 3, caractérisé en ce que pour s'affranchir des imprécisions sur le seuil de conduction de l'interrupteur commmandé les valeurs les plus faibles du signal d'entrée ne sont pas prises en compte par le microprocesseur (11).

5. Dispositif selon l'une quelconque des revendications 1 à 4, caractérisé en ce que les valeurs les plus importantes du signal d'entrée ne sont pas prises en compte par le microprocesseur (11).

6. Application du dispositif selon l'une quelconque des revendications 1 à 5, à l'introduction de données dans un microprocesseur (11) constituant un moyen de commande d'un lave-linge.

## Claims

1. A device for entering data in a microprocessor (11), particularly for a domestic appliance, in which the data element is determined by the activation of the control unit of a potentiometer or variable resistor, characterised in that the potentiometer is supplied by an alternating signal proportional to the signal of the mains supply and in that the signal at the terminals of the potentiometer (12) is applied to a control electrode (17) of a controlled contact breaker (18) which transmits a signal with a constant level to the data input (21) of the microprocessor (11) when the signal at the control electrode exceeds the conduction threshold (Vbe) of the controlled contact breaker.

2. A device according to Claim 1, characterised in that the controlled contact breaker (18) is composed of a transistor.

3. A device according to Claim 1 or 2, characterised in that the potentiometer (12), or variable resistor, is in series with a resistor (16) having a substantially more significant value, the signal of the mains supply, or a proportional signal, being applied to the terminals of the assembly in series composed of the variable resistor (12) and the resistor (16) with the greater value.

4. A device according to any one of Claims 1 to 3, characterised in that in order to be free from inaccuracies as to the conduction threshold of the controlled contact breaker, the lowest values of the input signal are not taken into account by the microprocessor (11).

5. A device according to any one of Claims 1 to 4, characterised in that the most significant values of the input signal which are not taken into account by the microprocessor (11).

6. Application of the device according to any one of Claims 1 to 5, to the entering of data in a microprocessor (11) constituting a control means of a washing machine.

## Patentansprüche

1. Vorrichtung zum Eingeben von Daten in einen Mikroprozessor (11), insbesondere für eine Haushaltsmaschine, in dem der Datenwert durch die Betätigung des Steuerorgans eines Potentiometers oder veränderlichen Widerstandes bestimmt wird, dadurch gekennzeichnet, daß das Potentiometer mit einem Wechselstromsignal gespeist wird, das dem Signal des Versorgungsnetzes proportional ist, und daß das Signal an den Klemmen des Potentiometers (12) an eine Steuerelektrode (17) eines gesteuerten Schalters (18) angelegt ist, der ein Signal mit konstantem Pegel an den Dateneingang (21) des Mikroprozessors (11) anlegt, wenn das Signal an der Steuerelektrode den Leitungsschwellenwert (Vbe) des gesteuerten Schalters überschreitet.

2. Vorrichtung nach Anspruch 1, dadurch gekennzeichnet, daß der gesteuerte Schalter (18) von einem Transistor gebildet ist.

3. Vorrichtung nach Anspruch 1 oder 2, dadurch gekennzeichnet, daß das Potentiometer (12) oder der veränderliche Widerstand in Serie mit einem Widerstand (16) mit wesentlich größerem Wert geschaltet ist, wobei das Netzsignal oder ein proportionales Signal an die Klemmen der Serienschaltung angelegt ist, das von dem veränderlichen Widerstand (12) und den Widerstand (16) mit größerem Wert angelegt ist.

4. Vorrichtung nach einem der Ansprüche 1 bis 3, dadurch gekennzeichnet, daß zur Befreiung von Ungenauigkeiten der Leitungsschwelle des gesteuerten Schalters die kleinsten Werte des Eingangssignals durch den Mikroprozessor (11) nicht berücksichtigt werden.

5. Vorrichtung nach einem der Ansprüche 1 bis 4, dadurch gekennzeichnet, daß die größten Werte des Eingangssignals vom Mikroprozessor (11) nicht berücksichtigt werden.

6. Anwendung der Vorrichtung nach einem der Ansprüche 1 bis 5 beim Eingeben von Daten in einen Mikroprozessor (11), der ein Mittel zum Steuern einer Waschmaschine bildet.
